# EUROPEAN PATENT APPLICATION

(11) **EP 2 843 606 A1**
(43) Date of publication of application: **04.03.2015**
(21) Application number: 14002917.4
(22) Date of filing: 22.08.2014
(51) Int. Cl.: G06Q 30/00

(54) **Method and system for providing a product identifier enabling smart devices to make a purchase into a third party payment platform**

(30) Priority: 26.08.2013 US 201314010040
(71) Applicant: FON Wireless Limited, London SW1Y 4JS (GB)
(72) Inventor: Garcia, Ivan, 28050 Madrid (ES); Arginzoniz, Iurgi, 28050 Madrid (ES); Fuidio, Imanol, 28050 Madrid (ES)
(74) Representative: Rentsch Partner AG

(57) **Abstract**

A method, non-transitory computer-readable medium and system are described to provide product information to a first device, such as a wireless portable client at a hotspot, by a remote access control server. The server can automatically identify a product registered in it based on identifying the network device providing the hotspot, and then send a message including a product identifier, the product identifier identifying the product, to the first device. This tells the first device that the product is available for purchase by the first device. Upon receipt of the message, the first device can automatically request, from a remote product server, information regarding the product, including price information, using the product identifier. The product may be wireless access for the client device to the Internet.

## Description

### BACKGROUND

### Field of the Disclosure

The present invention relates to the field of connecting a client device to a wireless hotspot and providing wireless service thereto, and more specifically to providing product information to the client device.

### Related Art

Wireless networking for electronic devices, including, for example, computers, portable digital assistants ("PDA's"), cellular telephones, printers, digital cameras or the like, have become very common and continues to grow in use and popularity throughout the world. Various factors have been driving the growth of Wi-Fi. For example, many laptop computers are equipped with built-in wireless technology (e.g., laptop computers configured with the known CENTRINO microchip processor). Also, dramatic reductions in the cost of Wi-Fi access point hardware, and reductions in costs associated with broadband internet connections have contributed to the growth of Wi-Fi.

Wireless hotspots offering Internet connectivity in public spaces, such as cafes, hotel lobbies and airports, have also been growing in popularity. Cafes and other retail establishments, hotel lobbies, airports and other tourist and business traveler-oriented locations increasingly offer a Wi-Fi hotspot to enable people with a wireless client to connect to the Internet.

A hotspot network is typically a controlled environment that interacts with the client device before granting internet access. The network operator operating the hotspot network in public places is unaware of the identity of the user. Thus, to control Internet access by the client device, and also as a means of generating revenue for hotspot network deployment and maintenance, a charge for Internet access can be imposed. A traditional way to monetize the provisional internet access is to charge the user for internet bandwidth, such as charging per unit of time, by the amount of bytes uploaded or downloaded, a flat subscription fee for membership, or the like. Thus, the user of the wireless client typically needs to work his or her way through a purchase process that is integrated with the authentication process for the client device to obtain Internet access. Such a process is typically long and sometimes not intuitive enough for the user to complete or to complete unassisted in a relatively short amount of time. When the public space accommodates tourists or travelers from abroad, a language barrier can exist because the wireless client can receive instructions in a foreign language for completing the authentication and the purchasing of network bandwidth.

If the product descriptions are stored in the client device in advance, then the user has a static range of options of products to purchase, and a hotspot owner has little or no control over the products he wishes to sell locally, and their prices. At the same time, allowing full internet access for the client device to enable the purchasing of products may not be desirable before the client device owner is made to pay for internet access at the hotspot.

Walter, U.S. Patent Application Publication No. 2004/0125781, published July 1,2004, the contents of which are incorporated by reference herein, describes managing local control of WLAN (Wireless Local Area Network) access such that a control server generates and returns an access code to the wireless access point that serves as a hotspot for wireless device. The hotspot operator provides "product" information, and in return control server returns the access code. However, Walter does not disclose or suggest that a remote server identifies a product sold locally by identifying a network device providing wireless access to the client device operated by user, and transmits to the client device via the network device an ID uniquely identifying a product or service. More generally, Walter does not disclose or suggest that the wireless device receives any ID uniquely identifying a product or service. Moreover, Walter does not disclose using an XML tagged message to send such unique ID for product or service.

Goei, U.S. Patent Application Publication No. 2007/0192438, published August 16,2007, the contents of which are incorporated by reference herein, describes on-demand delivery of media products using a wireless access point that provides a Wi-Fi network at a retail location, and an application server that provides a barcode or other identification to a mobile device of a customer of the retail location to identify a media purchase transaction that is made. Goei describes that the barcode sent by application server and received by the mobile device identifies a purchase transaction, including price information and the like, and that this barcode received may be used by the customer at checkout.

Tabak, International Publication No. WO 2010/099525, published September 2,2010, the contents of which are incorporated by reference herein, describes an automated shopping system in which a shopper uses a portable device to scan a barcode identifying a product, and that this barcode is automatically transmitted to a server. The server then uses the unique identifier provided by the barcode to transmit to the shopper information regarding the product for which the barcode was scanned, and related products may also advertised to shopper. Goei and Tabak are silent as to the features above-identified as missing in Walter.

### SUMMARY

Other features and advantages of the present invention will become apparent from the following description of the invention, which refers to the accompanying Drawings. A method, a computer-readable medium incorporating instructions configured to be executed by a processor, a system that incorporates the computer-readable medium and the processor, and means for executing the method are disclosed.

A non-transitory computer-readable medium incorporating instructions configured to be executed by a processor of a remote device is disclosed, wherein the remote device is configured to communicate with a first device over a network via a network device, and the instructions include:
product registration instructions configured to register a product associated with the network device;
network connection instructions configured to receive a request for communication with the first device, and to identify the product registered based on an identity of the network device; and
product identification signal instructions configured to provide automatically, to the first device, a product identification communication signal including a product identifier, the product identifier identifying the product, the product identification communication signal indicating to the first device that the product is available for purchase by the first device.

The network device may be or may include a wireless router communicating wirelessly with the first device. The remote device may be connected via the Internet with the network device. The product identification communication signal may be an XML tagged message.

The instructions may also include user interface instructions configured to enable user registration of the product associated with the network device.

The product identification communication signal may include product information describing the product, a price of the product and/or other information, including graphical and/or audio information regarding the product or a source, provider or merchant of the product.

Also described is a system including in combination the computer-readable medium as described above and a non-transitory computer-readable medium incorporating product server instructions configured to be executed by a processor of a product sever, wherein the product identifer is registered in the product server, and the product server instructions comprise:
product information request instructions configured to receive from the first device via the Internet a product information request including the product identifier; and
information providing instructions configured to transmit via the Internet, responsive to the product information request, product information describing at least one of the product and a price of the product.

In such a system the product server may be a device other than the remote device and may be remote from the remote device.

The network device may be identified by the network connection instructions based on a MAC address of the network device.

The instructions may also include venue type identification instructions configured to identify, based on the network device identification, a type of venue of the network device, and to identify the product registered according to the type of venue identified.

The product identification communication signal may include a second product identifier identifying a second product, and the second product may be identified based on an identity of the network device.

Also described is method of providing product information to a first device comprising a processor and configured to communicate over a network via a network device with a remote device comprising a processor, the method comprising:
registering, in the remote device, a product associated with the network device;
receiving, by the remote device, a request for communication from the first device via the network device;
identifying automatically, by the remote device, the network device;
identifying automatically, by the remote device, the product registered based on the identifying of the network device; and
providing automatically to the first device, by the remote device, a product identification communication signal including a product identifier, the product identifier identifying the product, the product identification communication signal indicating to the first device that the product is available for purchase by the first device.

Such a method may also include:
transmitting automatically to a product server including a processor, by the first device, a product information request for the product, the product information request containing the product identifier,
wherein the product server is remote from the first device and communicates with the first device over the Internet via the network device; and
transmitting automatically to the first device, by the product server, responsive to the product information request, product information describing at least one of the product and a price of the product.

In this method the product information request may be automatically transmitted by the first device upon receipt of the product identification communication signal.

The method may further comprise:
identifying automatically, by the remote device, a second product registered based on the identifying of the network device; and
providing automatically to the first device, by the remote device, the product identification communication signal including a second product identifier, the second product identifier identifying the second product, the product identification communication signal indicating to the first device that the second product is available for purchase by the first device.

The identifying of the network device may be performed based on a MAC address of the network device.

The method may further include:
identifying, based on the network access device identification, a type of venue of the network device; and
generating the product identification communication signal according to the type of venue identified.

According to the method, the network device may be a wireless router communicating wirelessly with the first device, the remote device is connected via the Internet with the network device, and the product identification communication signal comprises an XML tagged message.

The method may further include:
transmitting a user order for the product to a payment platform including a processor, wherein the payment platform is remote from the first device and from the remote device; and
processing payment for the product by communication with the payment platform.

According to such a method, this payment platform may be a third-party payment platform implemented by a remote server different from the remote device and connected via the Internet to the remote device.

The product identifier may identify a quantity of Internet access for the first device.

The quantity of Internet access may be an amount of time during which the network device provides wireless access for the first device.

Also, described is a computer-readable medium incorporating instructions configured to be executed by a first processor in a first device having a display, the first device configured to communicate with a remote device via a network device, the instructions comprising:
network connection request instructions configured to request a communication connection of the first device with the network device;
product identification retrieving instructions configured to retrieve automatically a product identifier contained in a product identification communication signal received from the network device, and to associate the product identifier with product information that corresponds to the previously stored product identifier, the product information describing a product available for purchase by the first device, by retrieving from the first device, the product identifier and the product information being previously stored in the first device;
product information display instructions configured to cause the display of the first device to report the product information corresponding to the product identifier.

The network device may be a wireless router communicating wirelessly with the first device, and the remote device is connected via the Internet with the network device.

The instructions may further include first device association instructions configured to establish a communication link between the first device and the network device before the execution of the network connection request instructions.

The product information can include a visual representation of the product. The product identification communication signal can include additional product information, including a price of the product, and the product information display instructions further comprise instructions to cause the display to report the price of the product.

The instructions may further include remote device connection instructions configured to establish a connection with the remote device via a wireless connection of the first device with the network device, the remote device being connected to the network device via the internet,
wherein the product identification communication signal received from the network device is based on a product identifier message received by the network device from the remote device, the product identifier message containing the product identifier.

The instructions may further include payment platform interface instructions configured to communicate with a remote payment platform; and product order processing instructions configured to receive a user order for the product and to process payment for the product by communication with the payment platform.

The instructions may further include remote device connection instructions configured to establish a connection with the remote device via a wireless connection of the first device with the network device, the remote device being connected to the network device via the internet,
wherein the product identification communication signal received from the network device is based on a product identifier message received by the network device from the remote device, the product identifier message containing the product identifier,
wherein the payment platform is a third-party payment platform implemented by a remote server different from the remote device and connected via the Internet to the remote device.

The instructions may further include:
remote device connection instructions configured to establish a connection with the remote device via a wireless connection of the first device with the network device, the remote device being connected to the network device via the internet,
wherein the product identification communication signal received from the network device is based on a product identifier message received by the network device from the remote device, the product identifier message containing the product identifier,
product order processing instructions configured to receive a user order entered on the first device, the order specifying the product, and to cause the first device to transmit a signal to the remote device via the network device, the signal including an indication of the order for the product.

The product identification communication signal can include a second product identifier, the product identification retrieving instructions further configured automatically retrieve the second product identifier from the product identification communication signal and to associate the second product identifier with second product information describing a second product available for purchase by the first device, the second product identifier and the second product information being previously stored in the first device, by retrieving from the first device the second product information that corresponds to the previously stored second product identifier, and
wherein the product information display instructions cause the display of the first device to report the second product information.

Also described is a system including the first device incorporating the computer-readable medium, and a remote module configured to be executed by a second processor in the remote device, the remote module comprising a processor and:
a connection module configured to establish a connection with the first device via the network device, the remote device being connected with the network device via the internet, the network device being a wireless bandwidth providing device communicating wirelessly with the first device; and
a product information module configured to store product identifiers and to transmit to the first device via the network device the product identifier.

In such a system, the product identifier can identify a quantity of Internet access for the first device, and the product information describes the quantity of network access available for purchase. The quantity of Internet access may be an amount of time during which the network device provides wireless access for the first device. The quantity of Internet access may be a quantity of data that is downloaded by the first device via a wireless bandwidth provided by the network device. The quantity of network access may be a quantity of data that is uploaded by the first device via a wireless bandwidth provided by the network device.

Further described is a method of providing a product identifier from a remote device to a first device connected to the remote device via a wireless router communicating wirelessly with the first device and communicating with the first device via the internet, the first device, the remote device, and the wireless router each including a processor, the method comprising:
requesting a communication connection between the first device and the network device;
redirecting a request for network access for the first device from the network device to the remote device;
transmitting, by the network device, a product identification communication signal, received from the remote device, to the first device;
retrieving, by the first device, the product identifier contained in the product identification communication signal received, and associating automatically the product identifier with product information describing a product available for purchase by the first device by retrieving from the first device the product information that corresponds to the previously stored product identifier; and
providing on a display of the first device a report of the product information corresponding to the product identifier.

In such a method, the product information corresponding to the product identifier can include a price of a product represented by the product identifier, and the product identifier identifies a quantity of internet access for the first device, and the product information describes the quantity of network access available for purchase.

The quantity of Internet access can be an amount of time during which Internet access is available for the first device.

### BRIEF DESCRIPTION OF THE DRAWINGS

For the purposes of illustrating the invention, in the Drawings illustrate embodiments that are presently preferred, it being understood, however, that the invention is not limited to the precise arrangements and instrumentalities shown. The features and advantages of the present invention will become apparent from the following description of the invention that refers to the accompanying drawings, in which:
Fig. 1 illustrates an example of a client device such as a smart device and an access controller communicating with each other via a network device over a network.
Fig. 2 illustrates an example of a flowchart showing steps of a method according to an aspect of the present disclosure.
Fig. 3 illustrates an example of a display showing a graphical user interface to enable the user to enter credentials.
Fig. 4 illustrates a communication interaction diagram between the smart device, the network device and the access controller, according to an aspect of the present disclosure.
Fig. 5 illustrates an example of a product list displayed on the display of a client device according to an aspect of the present disclosure.
Fig. 6 illustrates an example of an XML tagged message with a list of product identifiers, according to an aspect of the present disclosure.

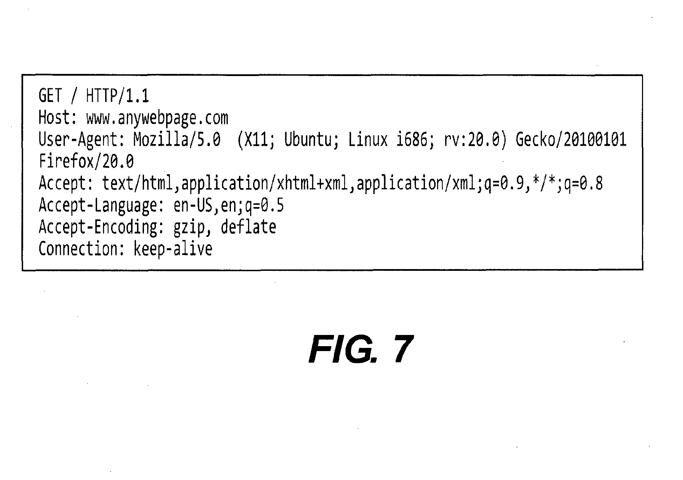

Fig. 7 illustrates an example of a message requesting Internet connection.
Fig. 8 illustrates an example of a network device redirection action message.
Fig. 9 illustrates an example of a client device requesting Internet connection to the access controller.
Fig. 10 illustrates an example of a response from access controller with login information and a product list, according to an aspect of the present disclosure.
Fig. 11 illustrates an example of a login request from the client device to the access controller.

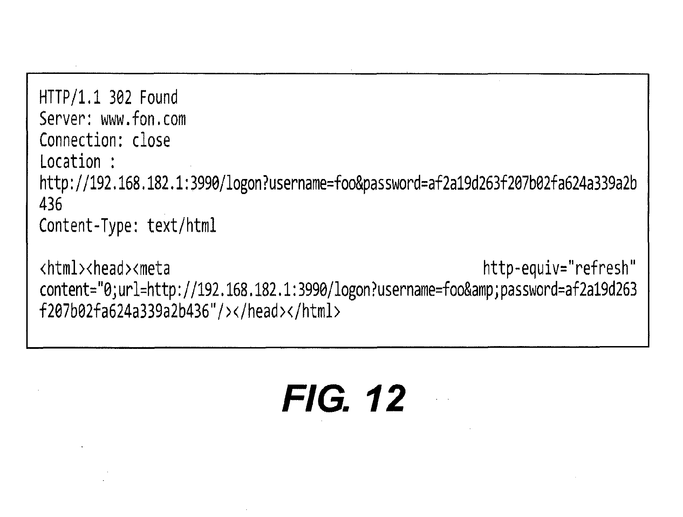

Fig. 12 illustrates an example of a message from access controller replying with the data necessary for authentication through the network device.
Fig. 13 illustrates an example of a client device that includes a product information provider, according to an aspect of the present disclosure.
Fig. 14 illustrates an example of an access controller that includes connection authorizer and product list processing, according to an aspect of the present disclosure.
Fig. 15 illustrates an example of access controller and network device provided as part of the same local network, according to an aspect of the present disclosure.

### DETAILED DESCRIPTION OF THE EMBODIMENTS

Described below with reference to the Drawings are a method, system, computer-readable medium, specially configured computer device, and means for performing the method that allows for a seamless way to allow users to view product information and to make a purchase when connecting to a wireless hotspot. Wireless hotspot operators and others can monetize the bandwidth provided by a wireless router that enables internet access by a wireless client by providing as a product to be purchased by the user of the wireless client a quantity of time or a quantity of uploaded or downloaded data for accessing the internet. Synchronization of products and services offered, and descriptive information about the products and services, between a backend remote server or other platform and a smart client device can be achieved using a product identifier that uniquely identifies the product.

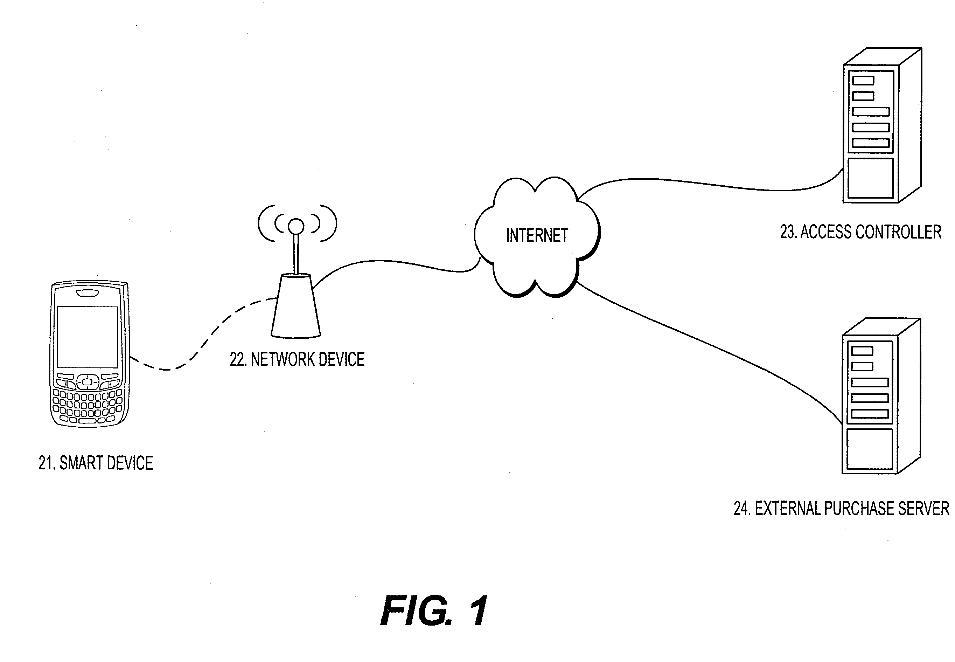

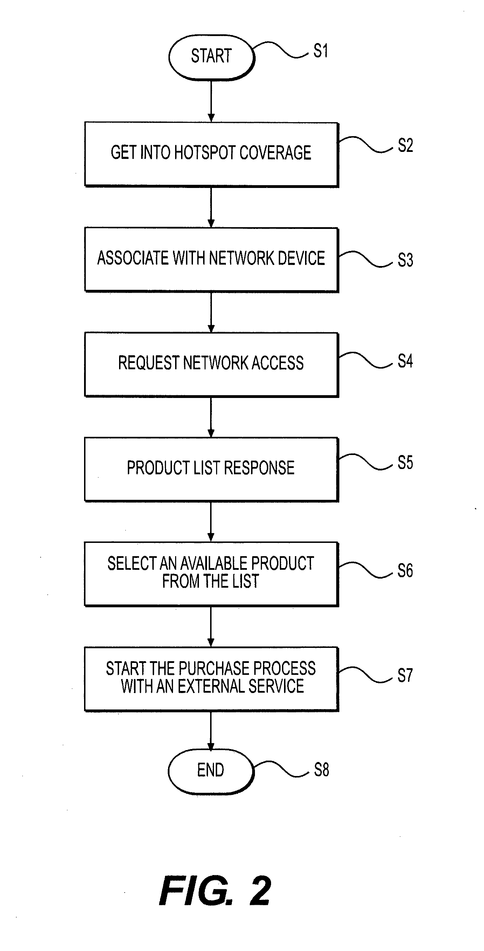

As illustrated in Fig. 2, at S2 client device 21 (illustrated in Fig. 1) attempts to find hotspot coverage, for example, by looking for Wi-Fi signal. The wireless signal may be a type of wireless signal, such as a radio frequency, such as a Bluetooth, a cellular frequency, satellite review signal or any other type of wireless signal. Client device 21 (illustrated in Fig. 1) may be a laptop, a handheld device, such as a tablet, a smartphone, an e-reader, a personal digital assistant or other type of portable device.

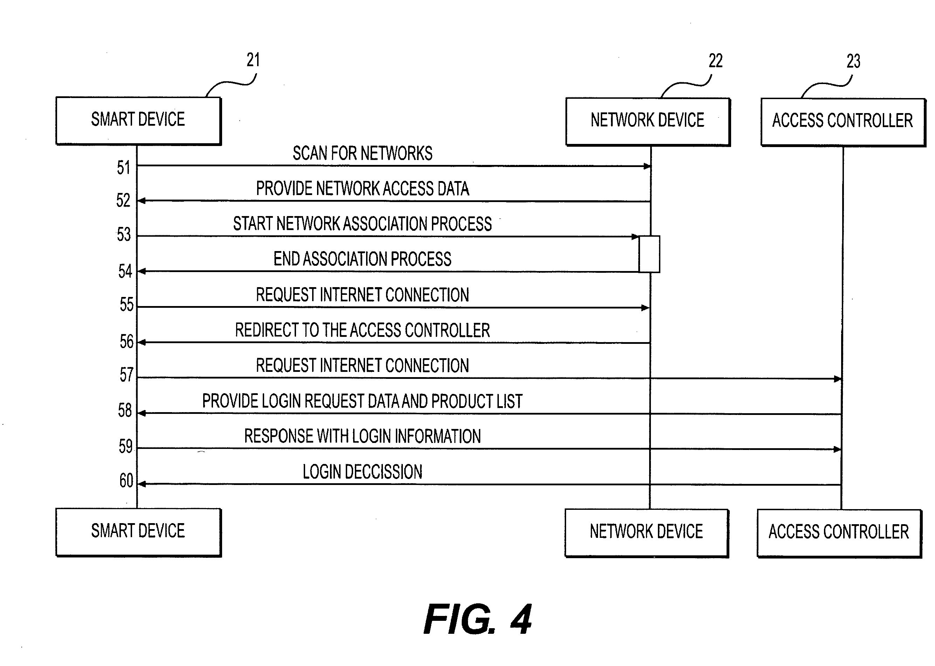

As illustrated in S3 of Fig. 2, client device 21 will then associate with network device 22 using a wireless connection. At S4, client device 21 (shown in Fig. 1) requests network access using the wireless connection to network device 22 (shown in Fig. 1). Fig. 4 illustrates in greater detail communication between smart device 21, the hotspot or wireless network device 22, and remote server or access controller 23 connected to network device 22 via a network such as the Internet. At 51, smart device 21 scans for networks within wireless communication range. At 52, smart device 21 receives network access data from network device 22 when smart device 21 is within range of network device 22. At 53, smart device 21 starts a network association process with network device 22 so as to establish a communication link with network device 22. At 54, network device 22 confirms association with and the association process between smart device 21 and the network device 22 is completed.

At this point, smart device 21 requests (Communication 55) Internet access to network device 22. At 56, network device 22 redirects the request to access controller, and at 57 access controller 23 receives a request for Internet access from smart device 21.

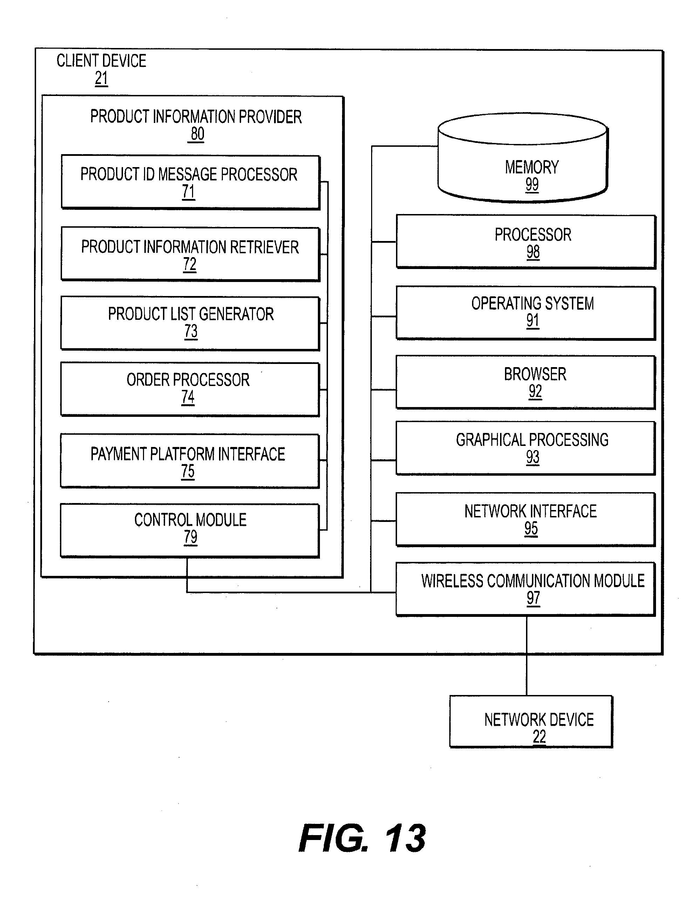

Fig. 13 illustrates client device 21, including processor 98 and memory 99, operating system 91 and browser 92. Network interface 95 of client device 21 illustrated in Fig. 13 handles the generation of the Internet access request by sending instruction to wireless communication module 97 of client device 21.

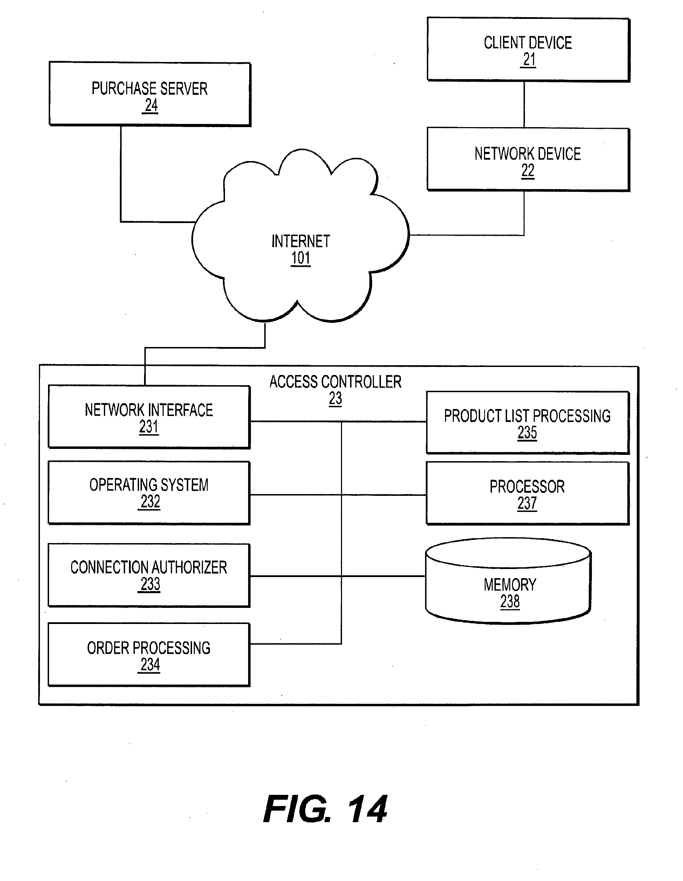

Fig. 14 illustrates remote server or access controller 23, which includes connection authorizer 233 to receive and to process the request for Internet connection from client device 21 received via network device 22. Fig. 14 also illustrates remote server or access controller 23 including a processor 237, memory 238 and operating system 232 that runs remote server 23. Network interface 231 of access controller 23 handles the IP protocol and communication with devices over Internet 101, including with network device 22.

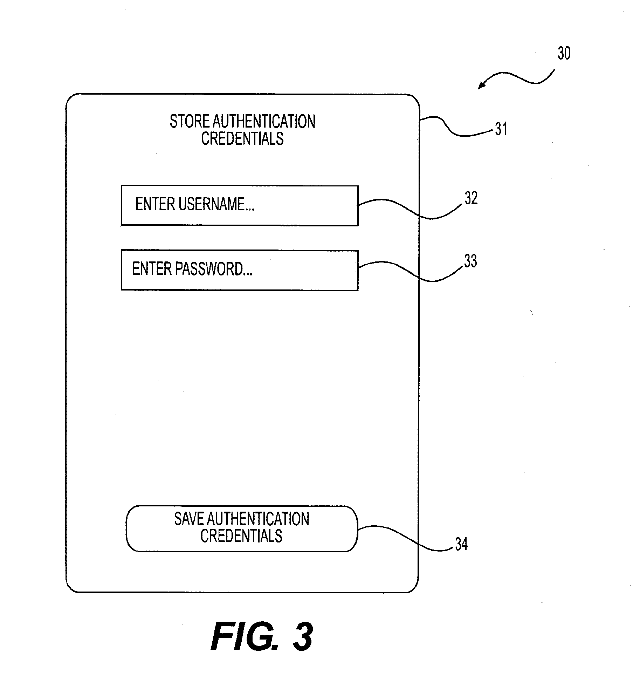

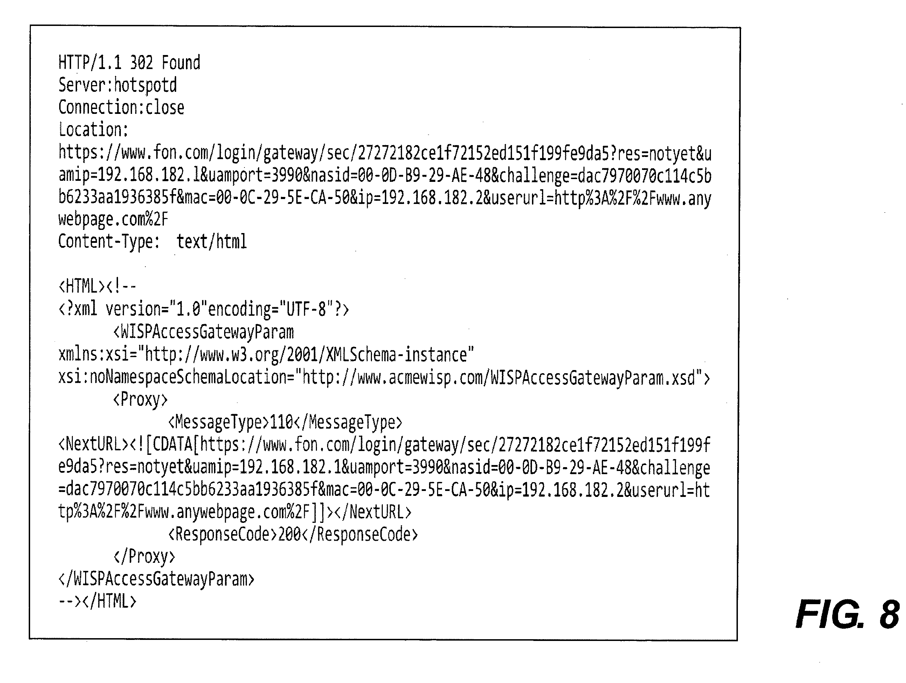

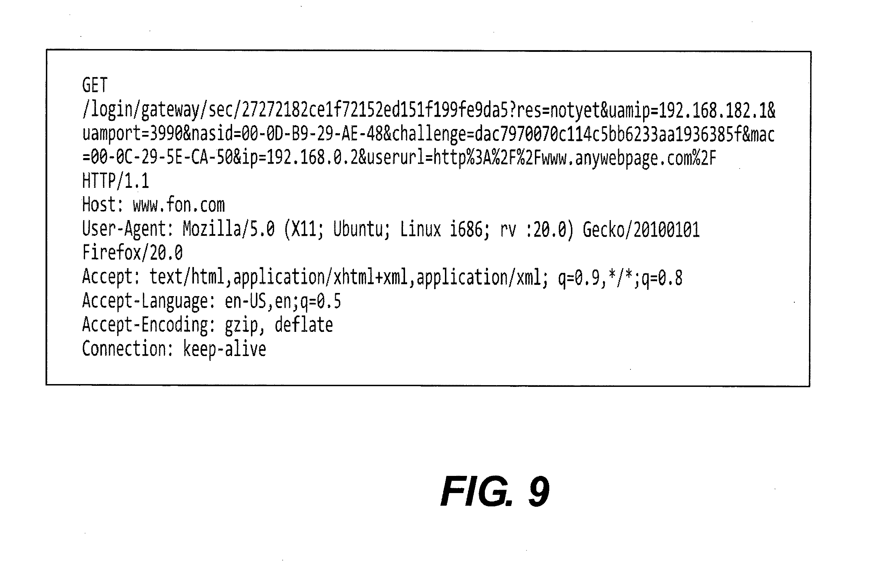

Upon receiving the request for Internet access, after or even before authorization of the client device, access control 23 at 58 of Fig. 4 provides login request data and the product list to client device 21 via network device 22. The login request data may be processed by client device 21 and the user may be prompted to enter username and user password as shown in Fig. 3. Client device 21 can determine whether the product list is to be shown to user on display 30. For example, client device 21 requests access to the network using the message illustrated in Fig. 9. Network device can redirect the internet connection request to access controller 23 for example using an HTTP protocol that embeds an XML tag specifying the location of the access controller, as shown in Fig. 8. The request for Internet connection from client device 21 may be to start an HTTP session through access controller using the parameters retrieved from network device 22 as illustrated in Fig 9.

Access controller 23 may include a network device/venue identification module 234 that identifies the network device. For example, a MAC address of network device may be obtained from the communication received by access controller 23 from network device 23. This MAC address may then be used by product identifier 235 to obtain from a look-up-table or relational database stored in memory 238 one or more products or product IDs associated with this network device. That is, an owner of the hotspot may wish to register in access controller 23 one or more products that the owner wishes to sell to wireless clients. Access controller 23 may provide a user interface accessed by the owner via the internet or a LAN to register the network device and to associate products to be sold therewith. Later, the owner can update the catalogue of products for sale by accessing the interface of access controller 23 to add new products, remove old products, modify product descriptions and/or prices, or the like. Access controller 23 may also identify network device in other ways, for example, using geolocation, such as GPS coordinates, obtained for the network device, the hotspot and/or client device 21. In the alternative, based on the identification by access controller 23 of network device 22, access controller 23 may determine a venue type for the hotspot and then generate the catalogue of products and product IDs according to the venue type identified. For example, network device 22 may be registered in access controller 23 or may otherwise be identified by access controller 23 as a donut franchise. The catalogue of products to be sold would then be generated according to this type of donut venue. Thus, a hotspot owner when registering the network device would be given a default set of products to be sold through the hotspot according to the type of venue.

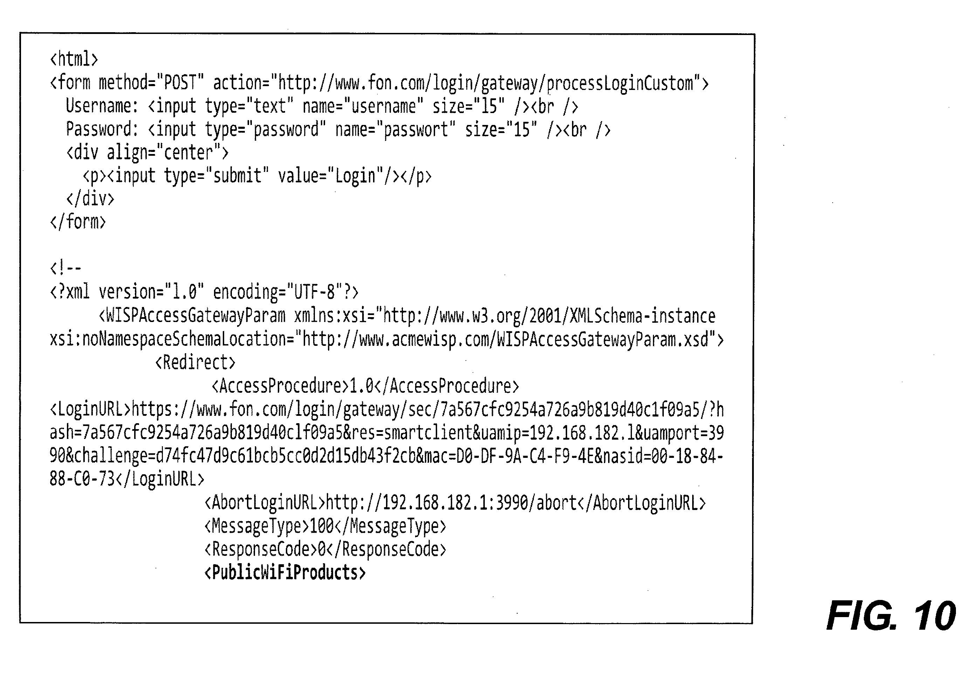

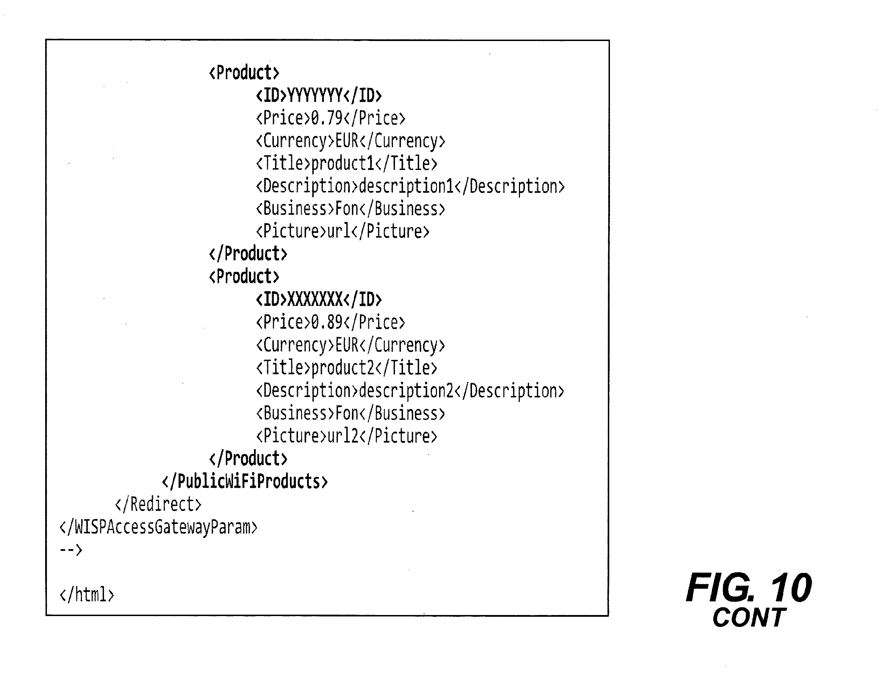

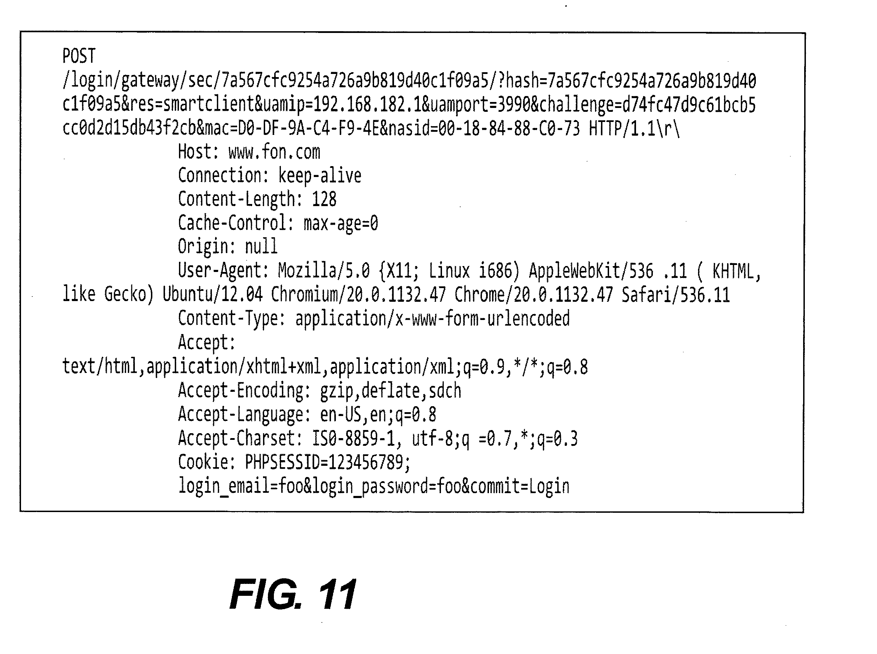

At this point, access controller 23 answers with the login information and message generation module 236 of access controller 23 produces a product list (illustrated in Fig. 4 at 59) by providing a message of a type similar to the example illustrated in Fig. 10. In response, client device 21 transmits the login data to access controller 23. The login data may include credentials necessary to access the network. An example of such a message as shown in Fig. 11. If the authentication is successful, access controller 23 can reply with the data necessary for performing the authentication. Client device 21 can decide whether to show the product list independent of the authentication process. For example, client device 21 may decide that the purchase of additional quantity of access or other products is necessary, and, in such a case, client device 21 may decide to provide the product list. In the alternative, client device 21 may decide always to show the product list even if the authentication process was successful to enable the user to purchase a product, or may decide to show the product or service or a list of such products and services even if the authentication process was unsuccessful, or even before client device 21 is fully authenticated, so that the user can purchase access to the internet or other products, including locally available products.

Fig. 3 illustrates display 30 of client device 31 that provides graphical user interface 31. Fig. 3 illustrates that when a client device 21 attempts to access the Internet by sending the Internet access connection request at 57 shown in Fig. 4, the graphical user interface prompts user to enter username in username box 32, and to enter a user password in password box 33. User can then save authentication credentials by pressing touch screen or clicking on bar 34. Based on this information transmitted from client device 21, access controller 23 will then authenticate the user and allow Internet access and also provide the product list. While described as access controller 23, it will be understood that more than one server can provide the functionality described with reference to access controller 23. For example, a server or group of servers may provide the authentication service for client device 21, while a second server or second group of servers can provide a product list.

As illustrated at S5 in Fig. 2, access controller 23 provides a list of products available for purchase by client device 21. In particular, product list processing 235 of access controller 23 via network interface 231 provides over network 101 to client device 21 the product identifier or a list of product identifiers, each product identifier identifying a product that may be purchased by client device 21. Immediately or shortly after receiving the message including the product identifier(s), product information retriever 72 of client device 21 may automatically generate a request sent to purchase server 24. The request may contain the product identification received from access controller 23. In return, purchase server may transmit product information, for example, product description, a graphical representation, graphic or audio information regarding the product, the product source, or the vendor, a price and sale terms and conditions, or other product information related to the product(s) identified by the product ID(s).

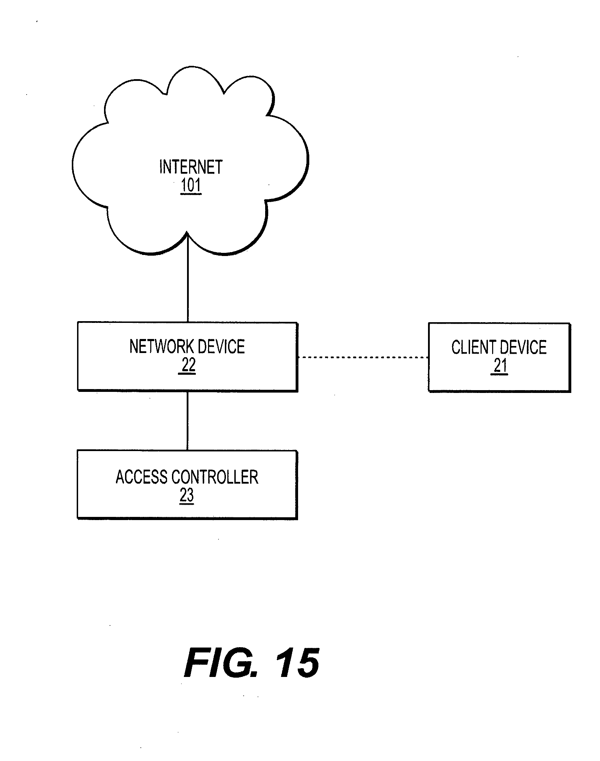

Network device 22 may include a wireless router. The wireless router and access controller 23 may be provided as part of the same LAN (local area network), as illustrated in Fig 15. In addition, network device 22 may be connected communicatively to access controller 23 located in a different local areal network, or access controller 23 may be connected to network device 22 via the Internet.

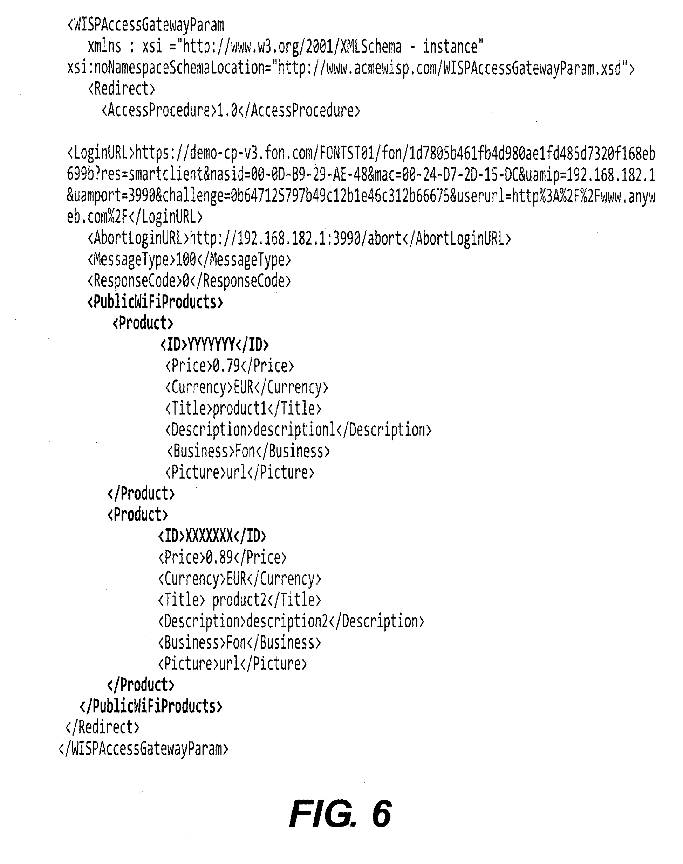

Fig. 6 is an example of an XML tagged message received by client device 21 that includes a list of product identifiers, and optionally, additional information about each product, such as price of the product, a picture or visual representation of the product, a logo of the vendor or other information identifying vendor of the product, descriptive text of the product terms and conditions of the offer or the like. It will be understood, however, that other types of messaging may also accomplish the providing of the product identifier. For example, any string of bits that uniquely identifies the product may suffice.

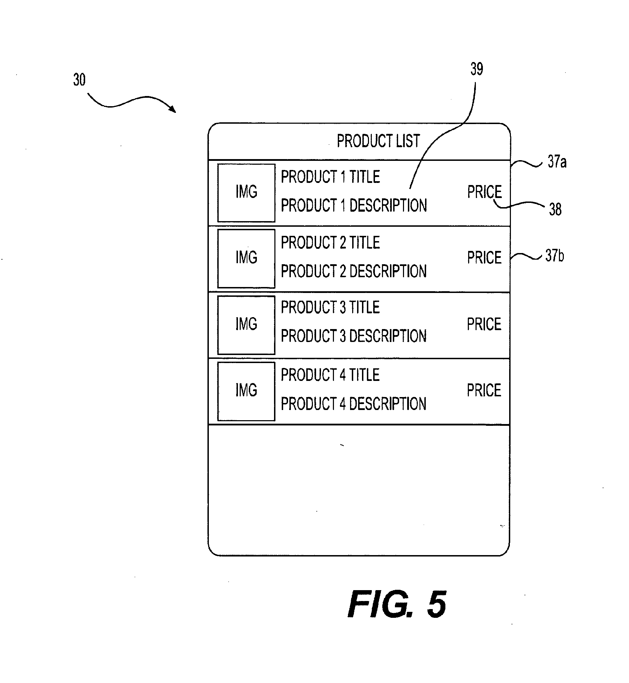

As shown in Fig. 5, the user is then provided a product list on display 30, including product description 39 and a price for each product item 37A, 37B etc. The product item 37A, 37B may also include an image providing a picture, photograph or other type of visual information or graphic or pictorial depiction for identification of the product, a logo of the vendor of the product or the like. In particular, client device 21 via wireless communication module 97 and network interface 95 receives the product identifier from access controller 23 through the network device 22. Product information provider 80 includes product ID message processor 71 that processes the message, for example, the message provided as an example of the type of message illustrated in Fig. 6 including the product identifier. Product information retriever 72 then retrieves information about the product that corresponds to the product identifier using an external product related information server.

Purchase server 24 may be provided as or may be connected to an external product information server, such as a third-party platform provided by Google in-app billing, or comparable services provided by Apple or Amazon, that stores the product information, such as texts, images, logos, price information and the like, the product information being linked with the product ID. The product ID can then be used by client device 21 to request the product information stored on the external product information server.

The products can be registered in this third-party external product information server by operators of the network hotspots, that is operators of the network device 22. Thus, the operator of the network device 22 can decide which products are to be sold at each hotspot. Additional information about the venue in which the hotspot is located or about the company operating it can also thus be associated with the product information or the product information list provided to the third-party external product information server by the operator of the network hotspot. Thus such venue and company information can also be provided to client device 21 together with the product information or the product information list.

In particular, after a new product is registered in this way with the external product information server, the third party external product information server automatically creates the correspondence between a product ID and the registered product identified by the product information. The product related information can be stored inside the external product information server, or a group of such servers, connected to the network device 22 via the Internet, or provided as part of a local area network with the network device 22. Alternatively, the product information associated with each product ID can be provided in access controller 23 described above that is part of the network device 22. Thus an in-app billing API may be provided in access controller 23. After the operator of the network device 22 registers the new product in the third party external product information server and creates an entry in access controller 23 for announcing the product in the hotspot, this change is automatically received by client device 21 when client device connects to the hotspot. Client device 21 can then use the billing process in the external product information server for retrieving the product information associated with a product ID and for purchasing the product. Alternatively, purchase server 24 may be a separate third party billing platform used by client device 21 for purchasing or for paying for the product.

Product IDs can be dynamically stored in a RAM (random access memory) by client device 21 after they have been read from the XML message or other message received. When the user starts a new authentication process with a different network device 22, the product ID as previously stored can be overwritten or erased. Product IDs can be shown after successful authentication of client device 21 or after a failed authentication. If shown after a failed authentication, the product IDs can be related to purchase of Internet access or can be limited to products related to purchase of Internet access.

Such information may be a pictorial representation of the product, a textual description, information about the vendor and the like. Such information may be stored in memory 99 of client device 21. Such a memory may be provided as a hard drive or other internal memory of client device 21, may be on an external drive, flash drive, or other peripheral device on or associated with client device 21, or may be a combination of the foregoing. Product list generator 73 then assembles a product list, which may be then shown to the user as illustrated in Fig. 5.

The product identified by product identifier may be access to the Internet. Even before the user is authenticated by access controller 23, access controller may enable the user to purchase access to the Internet by providing the product list. The product may be a quantity of time during which the user can access the internet, a subscription or membership that allows client device 21 access to the internet for a period of time, for example, membership for a day, a week, a month or some other period of time, during which the user may access the internet for an unlimited amount of time, a quantity of data that is uploaded, a quantity of data that is downloaded, or a total amount of uploaded and downloaded data by client device 21.

The quantity specified may allow for client device 21 access to the Internet only via network device 22 or may allow access to the Internet for client device 21 from a network of hotspots registered with access controller 23, or from any hotspot. Thus, the user may purchase the product that authorizes an hour of Internet access time, and this hour may be used exclusively with network device 22 or may be used at any hotspot, so long as the client device 21 is authorized by access controller 23. In addition, the time specified may be limited to a continuous amount of time during a single Internet access session, or may be split into a number of sessions as by the user.

Other products or services may also be specified by product identifier and shown to the user in the product list. For example, the owner of the network device 22 may wish to provide a range of products or services available locally for purchase. For example, if the public space in which the network device 22 is located is a hotel lobby, then products or services available at the hotel, such as products in one or more shops in or near the lobby, hotel services, such as rooms, room service, restaurant service or other food or beverages, fitness or spa services or the like can also be provided. Network device 22 may store in advance a list of product identifiers specifying products that the owner of the venue in which the hotspot is located may wish to present to guests, customers, clients or other users of the venue. Thus, network device 22 may previously store a list of relevant product identifiers and may present, after or even before authorization of the client device, a list appropriate for the users of the venue.

An external purchase server 24 illustrated in Figs. 1 and 14 may automatically be accessed by client device 21 when selecting a product for purchase from the product list. Order processor 74 of client device 21 may receive the order for the product selected by user, and payment platform interface 75 of client device 21 illustrated in Fig. 13 may provide instructions via control module 79, network interface 95 and wireless communication module 97 of client device 21 illustrated in Fig. 13 to external purchase server 24. Network device 22 may transmit the payment information via internet 101 to external purchase server 24. External purchase server 24 may be a third party server, such as a credit card, a company server or credit card issuing bank server, PayPal or bitcoin server or server operated on the premises of access controller 23. Once payment is confirmed by external purchase server 24 via internet 101 to the vendor, the product can be deemed to have been sold to smart device 21. Depending on the product, a server vendor may be in the same premises as access controller 23, or may be notified if the occurrence of the purchase. For example, order processing 239 may receive confirmation of payment for a product representing a quantity of network access by a network device 22 or a subscription of membership for using in the internet or the like, and may keep track of payments received, provide tallies and accounting and statistical or survey functions. Products or the product list sold by other vendors may have their own separate vendor servers. For example, the owner of the venue hosting network device 22 may have a server that provides products and services that is notified when a purchase by external purchase 24 has been confirmed.

Client device may be any type of computer, cable of communicating with a second processor, including a laptop, notebook, netbook, smartphone, e-reader or other hand held device or tablet. Mobile client applications can be provided on iOS and android devices, as well as other types of phones and handheld and portable devices. An Apache web server may be used running on LINUX. However, it will be understood that other systems may also be used. Access controller may be thought of as a traditional server, however, it may be comprised of one or more processor-driven devices, including portable devices. Further, network device may be a stand alone wireless router or may be provided as part of a system of several devices working in tandem, or may integrate the functionality of a number of devices, including a modem, an ISDN interface or the like.

The present methods, functions, systems, computer-readable medium product, or the like may be implemented using hardware, software, firmware or a combination of the foregoing, and may be implemented in one or more computer systems or other processing systems, such that no human operation may be necessary. That is, the methods and functions can be performed entirely automatically through machine operations, but need not be entirely performed by machines. Similarly, the systems and computer-readable media may be implemented entirely automatically through machine operations but need not be so. Computer systems as described herein may include one or more processors in one or more units for performing the system according to the present disclosure and these computers or processors may be located in a cloud or may be provided in a local enterprise setting or off premises at a third party contractor. Similarly, the information stored may be stored in a cloud or may be stored locally or remotely.

The computer system or systems for interacting with a user can include a GUI (Graphical User Interface), or may include graphics, text and other types of information, and may interface with the user via desktop, laptop computer or via other types of processors, including handheld devices, telephones, mobile telephones, smart phones or other types of electronic communication devices and systems. A computer system for implementing the foregoing methods, functions, systems and computer-readable storage medium may include a memory, preferably a random access memory, and may include a secondary memory. Thus, although illustrated as a system database, the database may be part of the same machine or may be located off site, and may be implemented as a floppy disk drive, magnetic tape drive, an optical disk drive, removable storage drive, a combination of the foregoing or any type of recording medium. Examples of a memory or a computer-readable storage medium product include RAM, ROM, a removable memory chip, such as an erasable programmable read-only memory (EPROM), a programmable read-only memory (PROM), an external memory, a peripheral memory, a removable storage unit or the like.

The communication interface may include a wired or wireless interface communicating over TCP/IP paradigm or other types of protocols, and may communicate via a wire, cable, fire optics, a telephone line, a cellular link, a radio frequency link, such as WI-FI or Bluetooth, a LAN, a WAN, VPN, the world wide web or other such communication channels and networks, or via a combination of the foregoing.

In an embodiment, the present application employs regards the extensible authentication protocol ("EAP"), an authentication framework that is frequently used in wireless networks and Point-to-Point connections. EAP is widely used, for example, in IEEE 802.11 (Wi-Fi), and WPA and WPA2 standards have adopted IEEE 802.1X with multiple EAP types for authentication mechanisms. When used as an authentication protocol, EAP is usable on the captive portal, and is suitable when used with WPA and/or WPA2. For example, LEAP (Lightweight - EAP), EAP-TLS, EAP-TTLS, EAP-FAST, EAP-SIM, EAP-AKA are applicable in association with one or more credentials and/or processes. In an embodiment, 802.1X involves a supplicant (e.g., a mobile computing device such as a smartphone, PDA or the like), an authenticator (e.g., a configured router) and a server. 802.1X is used to transport EAP messages via EAP over Lan ("EAPOL") from a supplicant to an authenticator, and thereafter via RADIUS/Diameter from authenticator to the server.

In such embodiment(s), a universal access method ("UAM") is used to transport password authentication protocol ("PAP") messages. Thereafter, HTTPs may be used for transporting data from supplicant to a UAM Server, HTTP is used from supplicant to authenticator, and RADIUS is used from Authenticator to Server.

Although the present invention has been described in relation to particular embodiments thereof, many other variations and modifications and other uses will become apparent to those skilled in the art. It is preferred, therefore, that the present invention be limited not by the specific disclosure herein.

## Claims

1. A non-transitory computer-readable medium incorporating instructions configured to be executed by a processor of a remote device configured to communicate with a first device over a network via a network device, the instructions comprising:
product registration instructions configured to register a product associated with the network device;
network connection instructions configured to receive a request for communication with the first device, and to identify the product registered based on an identity of the network device; and
product identification signal instructions configured to provide automatically, to the first device, a product identification communication signal including a product identifier, the product identifier identifying the product, the product identification communication signal indicating to the first device that the product is available for purchase by the first device.

2. The computer-readable medium of claim 1, wherein the network device comprises a wireless router communicating wirelessly with the first device, the remote device is connected via the Internet with the network device, and the product identification communication signal comprises an XML tagged message.

3. The computer-readable medium of claim 1, wherein the instructions further comprise user interface instructions configured to enable user registration of the product associated with the network device.

4. The computer-readable medium of claim 1, wherein the product identification communication signal includes at least one of product information describing the product and a price of the product.

5. A system including the computer-readable medium of claim 1 and a non-transitory computer-readable medium incorporating product server instructions configured to be executed by a processor of a product server, wherein the product identifier is registered in the product server, and the product server instructions comprise:
product information request instructions configured to receive from the first device via the Internet a product information request including the product identifier; and
information providing instructions configured to transmit via the Internet, responsive to the product information request, product information describing at least one of the product and a price of the product.

6. The system of claim 5, wherein the product server is a device other than the remote device and is remote from the remote device.

7. The computer-readable medium of claim 1, wherein the network device is identified by the network connection instructions based on a MAC address of the network device.

8. The computer-readable medium of claim 1, wherein the instructions further comprise venue type identification instructions configured to identify, based on the network device identification, a type of venue of the network device, and to identify the product registered according to the type of venue identified.

9. The computer-readable medium of claim 1, wherein the product identification communication signal includes a second product identifier identifying a second product, and the second product is identified based on an identity of the network device.

10. A method of providing product information to a first device comprising a processor and configured to communicate over a network via a network device with a remote device comprising a processor, the method comprising:
registering, in the remote device, a product associated with the network device;
receiving, by the remote device, a request for communication from the first device via the network device;
identifying automatically, by the remote device, the network device;
identifying automatically, by the remote device, the product registered based on the identifying of the network device; and
providing automatically to the first device, by the remote device, a product identification communication signal including a product identifier, the product identifier identifying the product, the product identification communication signal indicating to the first device that the product is available for purchase by the first device.

11. The method of claim 10, further comprising:
transmitting automatically to a product server including a processor, by the first device, a product information request for the product, the product information request containing the product identifier,
wherein the product server is remote from the first device and communicates with the first device over the Internet via the network device; and
transmitting automatically to the first device, by the product server, responsive to the product information request, product information describing at least one of the product and a price of the product.

12. The method of claim 11, wherein the product information request is automatically transmitted by the first device upon receipt of the product identification communication signal.

13. The method of claim 10, wherein the method further comprises:
identifying automatically, by the remote device, a second product registered based on the identifying of the network device; and
providing automatically to the first device, by the remote device, the product identification communication signal including a second product identifier, the second product identifier identifying the second product, the product identification communication signal indicating to the first device that the second product is available for purchase by the first device.

14. The method of claim 10, wherein the identifying of the network device is performed based on a MAC address of the network device.

15. The method of claim 10, wherein the method further comprises:
identifying, based on the network access device identification, a type of venue of the network device; and
generating the product identification communication signal according to the type of venue identified.

16. The method of claim 10, wherein the network device comprises a wireless router communicating wirelessly with the first device, the remote device is connected via the Internet with the network device, and the product identification communication signal comprises an XML tagged message.

17. The method of claim 10, wherein the method further comprises:
transmitting a user order for the product to a payment platform including a processor,
wherein the payment platform is remote from the first device and from the remote device; and
processing payment for the product by communication with the payment platform.

18. The method of claim 17, wherein the payment platform is a third-party payment platform implemented by a remote server different from the remote device and connected via the Internet to the remote device.

19. The method of claim 10, wherein the product identifier identifies a quantity of Internet access for the first device.

20. The system of claim 12, wherein the quantity of Internet access is an amount of time during which the network device provides wireless access for the first device.
